# EUROPEAN PATENT SPECIFICATION

(11) **EP 1 627 246 B1**
(45) Date of publication and mention of the grant of the patent: **13.06.2007**
(21) Application number: 04785592.9
(22) Date of filing: 05.04.2004
(51) Int. Cl.: G02B 5/12

(54) **RETROREFLECTIVE ARTICLE COMPRISING MICROSTRUCTURED ADHESIVE LAYER**
RETROREFLEKTIVER ARTIKEL MIT MIKROSTRUKTURIERTER HAFTSCHICHT
ARTICLE RETROREFLECHISSANT COMPRENANT UN ADHESIF MICROSTRUCTURE

(30) Priority: 29.05.2003 US 447873
(43) Date of publication of application: 22.02.2006
(73) Proprietor: 3M Innovative Properties Company, St. Paul, MN 55133-3427 (US)
(72) Inventor: THAKKAR, Bimal V., 3M Center, Saint Paul, Minnesota 55133-3427 (US); MAZUREK, Mieczyslaw H., 3M Center, Saint Paul, Minnesota 55133-3427 (US)
(74) Representative: Vossius & Partner
(86) International application number: PCT/US2004/010374
(87) International publication number: WO 2004/106993

(56) References cited:
- WO-A-00/69985
- US-A- 4 025 159

## Description

### Field of the Invention

The invention relates to retroreflective articles such as sheeting comprising a microstructured adhesive.

### Background of the Invention

Retroreflective sheeting is generally known. Such sheeting comprises reflective elements such as spherical lens (e.g. glass beads) or cube corner microstructures. Retroreflective sheeting is often supplied with an adhesive such as a pressure sensitive adhesive on a (e.g. non-viewing) surface of the sheeting covered by a release liner. The release liner is removed and the sheeting is adhered to a target substrate such as a sign backing.

Often the sheeting and the adhesive are transparent or translucent. Accordingly, the bond formed between the sheeting and the target substrate via the adhesive can be seen through the viewing surface of the sheeting. One characteristic of a good bond is the lack of air pockets between the sheeting and the target substrate. Although the air pockets may initially be absent, at times air pockets subsequently form particularly when the construction has been exposed to elevated temperatures and/or high humidity. This subsequent formation of air pockets is surmised to be caused by outgassing, i.e. the release of gas from at least one of the materials of the construction.

U.S. Patent No. 6,197,397 describes adhesives having a microreplicated topography. When an adhesion interface is established between the layer of adhesive and a supporting substrate, the topography of the adhesive surface controls the performance of the adhesion interface. Articles having microreplicated adhesive surfaces are also disclosed that have an advantage of providing microchannels for fluid egress for an effective period of time. Multiple microembossed patterns produce microreplicated adhesive surfaces having both microchannels for fluid egress and pegs for improved adhesive properties.

WO 00/22059 relates to an adhesive sheet that does not cause expansion when it is bonded onto an adherend made of concrete or mortar. The adhesive sheet comprising a substrate and an adhesive layer having concave portions on an adhesive surface place on one principal surface of said substrate wherein passages in communication with the outside are formed when the adhesive sheet is bonded to the adherend. The adhesive layer contains a rubber adhesive polymer and is fixed onto one principal surface of the substrate via a primer layer.

US-A-4 025 159 discloses a cellular retroreflective sheeting, which comprises a base layer of retroreflective elements and a transparent cover film supported in a spaced relation away from the base layer by a network of narrow intersecting bonds that form hermetically sealed cells in which retroreflective elements are isolated from retroreflective elements of different cells.

Although the use of a microreplicated adhesive on retroreflective sheeting has generally been described, industry would find advantage in improvements that reduces the occurrence of delamination as a result of the subsequent formation of air pockets.

### Summary of the Invention

The present inventor has found that the use of a microstructured adhesive having certain structural characteristics reduces and eliminates the subsequent formation of air pockets in the retroreflective article.

In one aspect, the invention discloses a retroreflective article comprising retroreflective sheeting bonded to a surface of a substrate with a pressure sensitive adhesive layer. The surface of the substrate comprises a polymeric material such as paint or plastic (e.g. sheet) materials (e.g. unconditioned polycarbonate). The adhesive layer comprises microstructures that define a plurality of channels, the channels having a volume wherein the volume is 1.0 x 10³ µm³ up to 1 x 10⁷µm² per 500 µm diameter circular area at the surface of the adhesive layer bonded to the substrate.

In another aspect, the adhesive layer comprises a plurality of microstructures arranged at a pitch of less than about 500 µm at the surface of the adhesive layer bonded to the substrate.

The invention also discloses methods of making a retroreflective article comprising providing a retroreflective sheeting, applying a microstructured adhesive to the sheeting wherein the adhesive layer has one or more of the described structural characteristics, providing a substrate that exhibits outgassing, and bonding the article to the substrate via the adhesive.

In each of these aspects, the article preferably exhibits less than 10% delamination after conditioning the article, e.g. 7 days at 95% relative humidity and temperature cycling between 35°F and 160 °F at 4 hour intervals. The channels preferably extend to a periphery of said article. Further, the channels are preferably present after conditioning the article for 7 days at 95% relative humidity and temperature cycling between 35°F and 160 °F at 4 hour intervals. Any retroreflective sheeting may be employed such as microsphere-based sheeting and cube corner-based sheeting. The contact surface area of the adhesive bonded to the substrate ranges from about 50% to about 98% such as from about 60% to about 97%. The adhesive may comprise a crosslinked acrylic adhesive optionally including up to about 25 wt-% tackifier. The adhesive may be crosslinked such that the gel content is between 60 and 85%.

### Brief Description of the Drawings

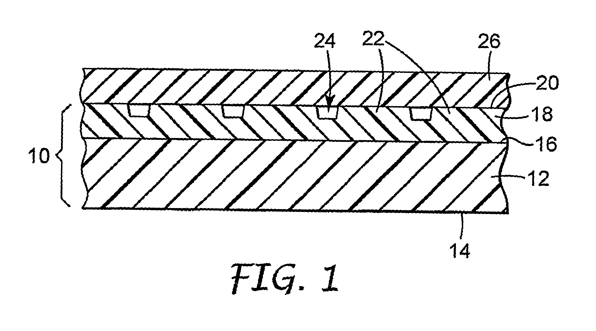

FIG. 1 is an enlarged, fragmentary, cross-sectional view of an exemplary retroreflective article of the invention.

### Detailed Description of the Preferred Embodiments

The invention relates to retroreflective articles such as sheeting comprising a microstructured adhesive. The microstructured adhesive is typically a pressure sensitive adhesive, temporarily covered by a release liner. During use the release liner is removed and the sheeting is adhered to a target substrate via the adhesive. Typically the adhesive is disposed on the non-viewing surface of the sheeting. However, in other uses, such as face-adhering retroreflective stickers, the adhesive may be present on the viewing surface.

For purposes of the present invention, the following terms used in this application are defined as follows:
"retroreflective sheeting" refers to a polymeric based sheet comprising retroreflective elements;
" microscopic" refers to structures of small enough dimension so as to require an optic aid to the naked eye when viewed from any plane of view to determine its shape. One criterion is found in Modern Optic Engineering by W. J. Smith, McGraw-Hill, 1966, pages 104-105 whereby visual acuity, "... is defined and measured in terms of the angular size of the smallest character that can be recognized." Normal visual acuity is considered to be when the smallest recognizable letter subtends an angular height of 5 minutes of arc on the retina. At typical working distance of 250 mm (10 inches), this yields a lateral dimension of 0.36 mm (0.0145 inch) for this object;
"microstructure" means the configuration of structures wherein at least two dimensions of the structures are microscopic. The topical and/or cross-sectional view of the structures must be microscopic;
"embossable" refers to the ability of a pressure-sensitive adhesive layer or liner to have part of its surface raised in relief such as by mechanical means;
"release liner", used interchangeably with the term "liner", refers to a flexible sheet which after being placed in intimate contact with pressure-sensitive adhesive surface may be subsequently removed without damaging the adhesive coating;
"microstructured liner" refers to a liner with at least one microstructured surface, which is suitable for contact with an adhesive;
"target substrate" and "substrate" refers to a substrate (e.g. sign backing) or surface to which the pressure-sensitive adhesive coating is applied for an intended purpose;
"compliant" refers to a polymeric film that is soft and flexible as well as having sufficient inelastic deformation after being stretched so that once stretched, the film does not recover to its original length;

The present inventive article **10,** as depicted in FIG.**1,** includes a retroreflective core sheet **12** having opposing surfaces **14, 16.** An adhesive **18** is bonded to surface **16** of a retroreflective core sheet **12.** Primers (not shown) may optionally be used to enhance the bond between the retroreflective core sheet and the adhesive. The adhesive **18** includes surface **20** bonded to a target substrate. The adhesive **18** includes structures **22** that define channels **24.** A substrate **26** is bonded to the retroreflective core sheet **12** by means of the microstructured adhesive **18.**

The adhesive includes a microstructured surface on an exposed surface of the adhesive opposite the retroreflective core sheet. The microstructured surface defines channels in the adhesive. Channels are continuous open pathways or grooves that extend into the adhesive from the exposed surface. The channels either terminate at the peripheral portion of the adhesive layer or communicate with other channels that terminate at a peripheral portion of the article.

The retroreflective article of the present invention advantageously provides an improvement in the reduction or elimination of the formation of air pockets due to outgassing. The channels in the adhesive of the present invention have specific dimensions to provide an egress to a periphery of the article for gasses or fluids trapped at the interface between the adhesive and the substrate. The channels preferably remain open for the lifetime of the product such as for at least 1 year. In some embodiments, the lifetime of the product may be 3 to 5 years. In some embodiments, characteristics of the channels render the microstructured surface of the adhesive substantially undetectable to the human eye when viewed from the exposed surface of the article after application.

In one aspect, the channels define a specific volume per any given area of the microstructured surface of the adhesive. The minimum volume per unit area of the adhesive ensures adequate egress at the interface of the substrate and the adhesive. Preferably, the channels define a volume of at least 1 x 10³ µm³ per any 500 µm diameter circular area in a two-dimensional plane of the adhesive. Most preferably, the channels define a volume in the range of above 1.0 x 10³ µm³ to about 1 x 10⁷ µm³ on any 500 µm diameter circular area. By "any" it is meant that substantially each and every 500 µm diameter circular area throughout the surface area has channels that define the volume just described. The dimensions of the channels can be described with reference to an aspect ratio. The aspect ratio is defined as the ratio of the greatest microscopic dimension of the channel parallel to the plane of the continuous layer of adhesive to the greatest microscopic dimension of the channel perpendicular to the plane of the continuous layer of adhesive. The aspect ratio is measured by taking the cross-sectional dimensions of the channel at an angle perpendicular to the wall of the channel. Depending on the specific type of channel, the aspect ratio may range from about 0.1 to about 20. A preferred aspect ratio for some embodiments is preferably less than about 5.

Alternatively or in combination with the channel volume per area, the retroreflective article of the invention comprises a microstructured adhesive having a regular pattern or groups of structures having a specific shape and a size. These structures are arranged at a pitch (average value of a distance between similar structural points of adjacent structures) of less than 500 µm (e.g. less than about 475 µm, less than about 450 µm, less than about 425 µm). Typically the pitch is less than about 400 µm (e.g. less than about 375 µm, less than about 350 µm, less than about 325 µm). More typically the pitch is less than about 300 µm (e.g. less than about 275 µm, less than about 250 µm, less than about 225 µm). Accordingly, the structures may be present in excess of 100 linear structures per inch. At too large of a pitch substantial delamination as a result of the subsequent formation of air pockets continue to be evident, particularly under the conditions described in the subsequent examples. The pitch is typically at least about 50 µm.

The dimensions and spacing of the channels result in the microstructured surface having a certain surface area relative to the total surface area at the interface with the target substrate. The percentage of surface area at the interface with the target substrate upon application relative to the total surface area ranges from about 35% to about 99%. The percentage can range from about 50% to about 98%. Further, the percentage can range from about 60% to about 97%. In some embodiments, the percentage can range from about 70% to about 96%. Typically, the percentage ranges from about 85% to about 95% to provide adequate fluid egress without adversely affecting adhesion to the substrate. The percentage areas of the interconnected channels to total surface area are the remainders.

The structures may be present in either a random array or in regular patterns. Individual structures at least partially define a portion of a channel in the adhesive. Selected patterns could include rectilinear patterns, polar patterns and other conventional regular patterns. A plurality of structures combine to create continuous channels on the surface of the adhesive. The shape of the channels can vary widely according to the processing methods, but each preferably has a V-shaped, U-shaped, rectangular or trapezoidal cross section on observation in a transverse direction. The shape of the structures may vary as well. Examples of structure shapes include but are not limited to those selected from the group consisting of hemispheres, prisms (such as square prisms, rectangular prisms, cylindrical prisms and other similar polygonal features), pyramids, or ellipsoids. Combinations of the different structure shapes can be utilized. The preferred shapes include those selected from the group consisting of hemispheres, prisms, and pyramids.

Each individual structure typically has a height of greater than about 3 micrometers but less than the total thickness of the adhesive layer, and preferably about 3 micrometers to about 50 micrometers. Additionally, some of the structures may be truncated to provide a surface for additional structures such as to increase the contact surface of the adhesives.

Double-featured structures may also be suitable for use in the present inventive article. Additionally, different configurations or shapes may be combined with base structures to achieve the desirable positioning properties for the present invention.

The thickness of the adhesive is dependent upon several factors, including for example, the adhesive composition, the type of structures used to form the microstructured surface, the type of substrate, and the thickness of the film. Those skilled in the art are capable of adjusting the thickness to address specific application factors. In general, the thickness of the adhesive layer is greater than the height of the structures. Preferably, the thickness of the adhesive layer is within a range from about 25 to about 125 µm.

The use of a release liner or backing is one method suitable for forming the microstructured adhesive. The release liner can be advantageously made of various materials such as but not limited to plastics such as polyethylene, polypropylene, polyesters, cellulose acetate, polyvinylchloride, and polyvinylidene fluoride, as well as paper or other substrates coated or laminated with such plastics. These embossable coated papers or thermoplastic films are often siliconized or otherwise treated to impart improved release characteristics. The thickness of the release liner can vary widely according to the desired effect. Furthermore, it is possible to afford structures to the release liner by using various techniques, such as those disclosed in U.S. Patent No. 5,650,215 (Mazurek), incorporated herein by reference in its entirety.

Structured and microstructured adhesives are generally known from for example U.S. Patent No. 6,197,397 (Sher); WO 00/22059 (Hidetoshi); and WO 00/69985 (Mikami). The microstructured adhesive is preferably produced by imparting the microstructured surface onto an adhesive layer with practices conventionally recognized in the art. The features are imparted by embossing the adhesive directly through utilization of molding tools or by coating the adhesive onto a liner or backing previously embossed with the inventive features. Such methods and practices are fully disclosed in U.S. Patent No. 5,650,215, previously incorporated by reference. The topography of the embossing tool(s) typically has the same topography as the microreplicated adhesive, with the liner having an inverse topography in order to replicate the image of the tool(s) on the adhesive surface. Alternatively an inverse embossing tool may be used to directly impart the microstructures onto the adhesive surface. The microstructured adhesive may be manufactured by other means as well.

Useful adhesives include those which are capable of retaining microstructured features on an exposed surface such as after being embossed with a microstructured molding tool, backing or liner, or after being coated on a microstructured molding tool, backing or liner from which it is subsequently removed. Preferably, the adhesive is a pressure sensitive adhesive, meaning that the adhesive is tacky at ambient temperature such that a bond can be formed. Alternatively, other non- pressure sensitive adhesive compositions may be employed. A suitable heat activatable adhesive is an acrylic adhesive having 80 parts isooctyl acrylate and 20 parts acrylic acid.

The microstructured adhesives are capable of retaining their microstructured surfaces for a time sufficient to allow outgassing. One of ordinary skill in art may select or formulate a creep resistant adhesive such as by adjusting the extent of chemical and/or physical crosslink density and/or by the inclusion of filler. The particular pressure sensitive adhesive selected for a given application is dependent upon the intended use of the retroreflective sheeting.

Many pressure-sensitive adhesives are suitable for the invention. Classes of pressure-sensitive adhesives include acrylics, tackified rubber, tackified synthetic rubber, ethylene vinyl acetate, silicone, and the like. Since retroreflective articles are typically constructed to have outdoor durability, acrylic based adhesive are preferred. Further, some acrylic based adhesive also exhibit rheological properties that are amenable to the channels remaining open for a sufficient time to allow outgassing. Suitable acrylic adhesives are disclosed, for example, in U.S. Patent Nos. 3,239,478, 3,935,338, 5,169,727, RE 24,906, 4,952,650, and 4,181,752 and in particular U.S. Patent No. 5,257,491. A preferred class of pressure-sensitive adhesives is the reaction product of at least one alkyl acrylate with at least one reinforcing comonomer. Suitable alkyl acrylates are those having a homopolymer glass transition temperature below about -10°C and include, for example, n-butyl acrylate, 2-ethylhexylacrylate, isoctylacrylate, isononyl acrylate, octadecyl acrylate and the like. Suitable reinforcing monomers are those having a homopolymer glass transition temperature above about 20°C and include for example, acrylic acid, itaconic acid, isobornyl acrylate, N, N-dimethylacrylamide, N-vinyl caprolactam, N-vinyl pyrrolidone, and the like.

The adhesives may be polymers that are dispersed in solvent or water and coated onto the release liner and dried, and optionally crosslinked. If a solventborne or waterborne pressure-sensitive adhesive composition is employed, then the adhesive layer must undergo a drying step to remove all or a majority of the carrier liquid. Additional coating steps may be necessary to achieve a smooth surface: The adhesives may also be hot melt coated onto the liner or microstructured backing. Additionally, monomeric pre-adhesive compositions can be coated onto the liner and polymerized with an energy source such as heat, UV radiation, e-beam radiation.

The pressure sensitive adhesive can optionally include one or more additives. Depending on the method of polymerization, the coating method, the end use, etc., additives selected from the group consisting of initiators, fillers, plasticizers, tackifiers, chain transfer agents, fibrous reinforcing agents, woven and non-woven fabrics, foaming agents, antioxidants, stabilizers, fire retardants, viscosity enhancing agents, coloring agents, and mixtures thereof can be used.

The retroreflective core sheeting is generally a compliant film and made of one or more plastic materials used conventionally by those skilled in the art. The thickness of the retroreflective core sheet (i.e. microstructured layer) can vary widely, but usually is less than about 400 µm or less, and preferably ranges from about 25 µm to about 100 µm.

A variety of retroreflective core sheets may be employed. Such core sheets may be retroreflective alone, prior to application of the topcoat described herein or may provide retroreflection only after being combined with such topcoat. The retroreflective core is typically a preformed sheeting. The two most common types of retroreflective sheeting are microsphere-based sheeting and cube corner-based sheeting.

Microsphere-based sheeting, sometimes referred to as "beaded sheeting," is well known in the art and includes a multitude of microspheres typically at least partially embedded in a binder layer, and associated specular or diffuse reflecting materials (such as metallic vapor or sputter coatings, metal flakes, or pigment particles). Illustrative examples of microsphere-based sheeting are disclosed in U.S. Pat. Nos. 4,025,159 (McGrath); 4,983,436 (Bailey); 5,064,272 (Bailey); 5,066,098 (Kult); 5,069,964 (Tolliver); and 5,262,225 (Wilson). For embodiments that employ microsphere-based sheeting, the specular reflecting material is typically covered with a protective coating prior to application of the microstructured adhesive.

Cube corner sheeting, sometimes referred to as prismatic, microprismatic, triple mirror or total internal reflection sheetings, typically include a multitude of cube corner elements to retroreflect incident light. Cube corner retroreflectors typically include a sheet having a generally planar front surface and an array of cube corner elements protruding from the back surface. Cube corner reflecting elements include generally trihedral structures that have three approximately mutually perpendicular lateral faces meeting in a single corner, i.e. a cube corner. In use, the retroreflector is arranged with the front surface disposed generally toward the anticipated location of intended observers and the light source. Light incident on the front surface enters the sheet and passes through the body of the sheet to be reflected by each of the three faces of the elements, so as to exit the front surface in a direction substantially toward the light source. In the case of total internal reflection, the air interface must remain free of dirt, water and adhesive and therefore is enclosed by a sealing film. Alternatively, reflective coatings may be applied on the back side of the lateral faces. Polymers for cube corner sheeting include poly(carbonate), poly(methyl methacrylate), poly(ethylene terephthalate), aliphatic polyurethanes, as well as ethylene copolymers and ionomers thereof. Cube corner sheeting may be prepared by casting directly onto a film, such as described in U.S. Patent No. 5,691,846 (Benson, Jr.). Polymers for radiation-cured cube corners include crosslinked acrylates such as multifunctional acrylates or epoxies and acrylated urethanes blended with mono-and multifunctional monomers. Further, cube corners such as those previously described may be cast on to plasticized polyvinyl chloride film for more flexible cast cube corner sheeting. These polymers are often employed for one or more reasons including thermal stability, environmental stability, clarity, excellent release from the tooling or mold, and capability of receiving a reflective coating.

Typically cube corner sheeting employs a topcoat layer that gives protection to the underlying cube corner layer and may add other functionality such as improved ink receptivity, dirt resistance, flexibility or rigidity, coloration, etc. Topcoats of the invention can be coated directly onto the cube corner sheeting or alternately preformed and heat laminated either during the manufacturing of the cube corner layer or in a subsequent operation. When using relatively thick, strong, thick polycarbonate layers for the cube corner sheeting, the topcoat has a minimal contribution to the physical properties of the sheeting, and polymer selection can be made based on the adhesion to the polycarbonate, dirt resistance, resistance to surface impression, etc.

In embodiments wherein the sheeting is likely to be exposed to moisture, the cube corner retroreflective elements are preferably encapsulated with a seal film or the cubes can be specular reflective coated and back filled to totally embed the cube layer in water resistant polymer. In instances wherein cube corner sheeting is employed as the retroreflective layer, a backing layer may be present for the purpose of opacifying the article or article, improving the scratch and gouge resistance thereof, and/or eliminating the blocking tendencies of the seal film. Illustrative examples of cube corner-based retroreflective sheeting are disclosed in U.S. Pat. Nos. 4,588,258 (Hoopman); 4,775,219 (Appledom et al.); 4,895,428 (Nelson); 5,138,488 (Szczech); 5,387,458 (Pavelka); 5,450,235 (Smith); 5,605,761 (Burns); 5,614,286 (Bacon Jr.) and 5,691,846 (Benson, Jr.).

The retroreflective article typically exhibits a retroreflected brightness of at least 50 candelas per lux (i.e. lumen/m²), when measured at 0.2° observation angle and -4.° entrance angle and the retroluminometer described in U.S. Defensive Publication T987,003. For cube corner sheeting the coefficient of retroreflection is preferably at least about 200 candelas per lux for fluorescent orange and at least about 550 candelas per lux for white.

The retroreflective sheeting may be used for a variety of uses such as traffic signs, license plates, personal safety, vehicle decoration and commercial graphics such as retroreflective advertising displays, bus wraps, etc.

The retroreflective article can be applied to a variety of target substrates. It is important to match a specific pressure sensitive adhesive to a substrate in order to achieve the desired level of adhesion. Examples of suitable substrates include glass, metal, plastic, wood, and ceramic substrates, and painted surfaces of these substrates. Representative plastic substrates include polyvinyl chloride, ethylene-propylene-diene monomer rubber, polyurethanes, polymethyl methacrylate, engineering thermoplastics (e.g., polyphenylene oxide, polyetherketone, polycarbonate), and thermoplastic elastomers. Plastic substrates and in particular polycarbonate are particularly prone to outgassing. These substrates are generally smooth substrates that accentuate the need for an article with fluid and gas egress.

The application of the article requires the positioning of the article over the substrate. The microstructured surface of the present invention enables the movement of the adhesive-backed article about the surface of the substrate until pressure is applied to enable adhesive contact and wet out of the adhesive on the surface of the substrate. The appropriate level of pressure and resulting wet out will create a bond between the adhesive and the substrate without collapsing the channels.

Upon forceful application of the article, the channels permit any entrapped fluid to bleed out around the periphery of the article, thereby eliminating air bubbles. The retroreflective sheeting articles of the present invention are often sufficiently durable such that the articles are able to withstand at least one year and more typically at least three years of weathering. This can be determined with ASTM D4956-99 Standard Specification of Retroreflective Sheeting for Traffic Control that describes the application-dependent minimum performance requirements, both initially and following accelerated outdoor weathering, of several types of retroreflective sheeting. Initially, the reflective substrate meets or exceeds the minimum coefficient of retroreflection. For Type I white sheetings ("engineering grade"), the minimum coefficient of retroreflection is 70 cd/fc/ft² at an observation angle of 0.2° and an entrance angle of-4°, whereas for Type III white sheetings ("high intensity") the minimum coefficient of retroreflection is 250 cd/fc/ft² at an observation angle of 0.2° and an entrance angle of -4°. In addition, minimum specifications for shrinkage, flexibility adhesion, impact resistance and gloss are typically met. After accelerated outdoor weathering for 12, 24, or 36 months, depending on the sheeting type and application, the retroreflective sheeting typically shows no appreciable cracking, scaling, pitting, blistering, edge lifting or curling, or more than 0.8 millimeters shrinkage or expansion following the specified testing period. Further, the weathered retroreflective articles typically exhibit at least the minimum coefficient of retroreflection and colorfastness. For example, Type I "engineering grade" retroreflective sheeting intended for permanent signing applications retains at least 50% of the initial minimum coefficient of retroreflection after 24 months of outdoor weathering and Type III high intensity type retroreflective sheeting intended for permanent signing applications retains at least 80% of the initial minimum coefficient ofretroreflection following 36 months of outdoor weathering in order to meet the specification. The coefficient of retroreflection values, both initially and following outdoor weathering, are typically about 50% lower in view on imaged retroreflective substrates.

Objects and advantages of the invention are further illustrated by the following examples, but the particular materials and amounts thereof recited in the examples, as well as other conditions and details, should not be construed to unduly limit the invention. All percentages and ratios herein are by weight unless otherwise specified.

### Examples

A microstructured liner was prepared using an embossing technique in the manner described in Example 3 of WO 00/69985. Accordingly, the channels had a top width ("W1") of 20 µm, a bottom width ("W2") of 3 µm, and a depth of 13 µm and a pitch 197 µm. Further the average volume per any 500 µm circular diameter was about 2.85 X 10⁵ µm³.

An adhesive having 93 parts isooctyl acrylate and 7 parts acrylic acid adhesive was prepared as described in U.S. Patent No. 5,257,491. The adhesive was hot melt coated directly onto the microstructured liner at a temperature of 175°C at a thickness indicated in following Table I using a rotary rod die and electron-beam crosslinked with the dosage indicated in following Table I, and laminated at a pressure of 80 psi directly to retroreflective sheeting commercially available from 3M Company, St. Paul, MN under the trade designation "3M Retroreflective Sheeting 3990T". Two comparative examples were also made using the same adhesive. For Comparative Examples A1 and A2 an unstructured liner was used. For Comparative Example B a microstructured liner was employed having a pitch of 1.27 mm, a channel width of 90 microns and a channel height of 23 microns. The volume of the channels of Comparative Example B is indeterminate since some 500µm circular diameter areas do not have a channel.

Under an optical microscope, it was confirmed that the adhesive had retained its channels after lamination to the retroreflective sheeting. The samples having the adhesive coated retroreflective sheeting and the liner were cut into 6" X 12" sheets. The liner was removed and the adhesive coated retroreflective sheeting was then laminated to polycarbonate test panels using an applicator with a pressure of 40 psi commercially available under the trade designation "Lexan" from GE Polymershapes, Seattle, WA. As set forth in following Table I, both conditioned and unconditioned polycarbonate test panels were tested. The conditioned polycarbonate test panels were oven dried at 250°F for 24 hrs and the sheeting was applied within 2 hours of cooling to ambient temperature.

The retroreflective article having the retroreflective core sheeting bonded to a substrate (i.e. polycarbonate test panel) were conditioned at 95% relative humidity and cycled between 35°F and 160°F at 4 hour intervals for 7 days. For each cycle, the temperature stabilized within 1 hour and maintained the temperature for the remaining 3 hours. After testing the article was inspected for delamination, i.e. the formation of air bubbles between the polycarbonate test panel and the view surface of the sheeting. Each air bubbled was outlined with a marker and the total surface area of the outlined regions estimated. The results are depicted in Table I as follows:

**Table I**

| | Dose (Mrad) | Adhesive thickness (grain wt.) | Polycarbonate Substrate | Percent delamination (Average of 2 samples) |
|---|---|---|---|---|
| Comparative A1 | 2.5 | 27 | Unconditioned | 80-85 |
| Example 1 | 2.5 | 27 | Unconditioned | 0-1 |
| Example 2 | 4.5 | 27 | Unconditioned | 8-10 |
| Example 3 | 4.5 | 13 | Unconditioned | 0 |
| Comparative A2 | 2.5 | 27 | Conditioned | 17-21 |
| Example 4 | 2.5 | 27 | Conditioned | 8-10 |
| Example 5 | 4.5 | 27 | Conditioned | 0-2 |
| Example 6 | 4.5 | 13 | Conditioned | 0-1 |

All six examples resulted in less than about 10% delamination after being subjected to high humidity and elevated temperatures. Comparative Examples A1 and A2, employing an unstructured liner, exhibited considerably higher amounts of delamination than Example 1-3 and Example 4-6 respectively, subject to the same extent of crosslinking. After conditioning the Examples were inspected under a microscope. The channels were found to still be open.

Comparative Example B exhibited greater than 50% delamination from the sheeting during conditioning.

## Claims

1. A retroreflective article comprising retroreflective sheeting (12) bonded to a surface of a substrate (26) with an adhesive layer (18) wherein the surface of the substrate (26) comprises a polymeric material and the adhesive layer comprises microstructures (22) that define a plurality of channels (24), the channels (27) having a volume of 1.0 x 10³ µm³ up to 1 x 10⁷ µm³. per 500 µm diameter circular area at the surface of the adhesive layer (18) bonded to the substrate.

2. The retroreflective article of claim 1 wherein the article is adapted to exhibits less than 10% delamination after conditioning the article for 7 days at 95% relative humidity and temperature cycling between 35 °F and 160 °F at 4 hour intervals.

3. The retroreflective article of claim 1 wherein the article is adapted to exhibit less than 5% delamination after conditioning the article for 7 days at 95% relative humidity and temperature cycling between 35°F and 160°F at 4 hour intervals.

4. The retroreflective article of claim 1 wherein the channels (24) extend to a periphery of said article.

5. The retroreflective article of claim 1 wherein said microstructures (22) define said channels (24) such that the channels (24) are present after conditioning the article for 7 days at 95% relative humidity and temperature cycling between 35 °F and 160 °F at 4 hour intervals.

6. The retroreflective article of claim 1 wherein the surface of the substrate (26) is selected from paint and plastic materials.

7. The retroreflective article of claim 1 wherein the substrate (26) comprises unconditioned polycarbonate.

8. The retroreflective article of claim 1 wherein the surface of the adhesive (18) bonded to the substrate (26) has a contact surface area ranging from about 50% to about 98%.

9. The retroreflective article of claim 1 wherein the adhesive (18) is a pressure sensitive adhesive.

10. The retroreflective article of claim 1 wherein the adhesive (18) comprises a crosslinked acrylic adhesive.

11. The retroreflective article of claim 10 wherein the adhesive (18) is crosslinked such that the gel content is between 60 and 85%.

12. A retroreflective article of claim 1, wherein the adhesive layer (18) comprises regular microstructures arranged at a pitch of less than about 500 µm at the surface, of the adhesive layer (18) bonded to the substrate (26).

13. A method of making a retroreflective article comprising:
a) providing a retroreflective sheeting (12) ;
b) applying a microstructured adhesive (18) to the sheeting (12) wherein microstuctured adhesive layer (18) opposing the sheeting (12) comprises a plurality of microstructures (22) that define a plurality of channels (24), the channels having a volume of 1.0 x 10³ µm³ up to 1x10⁷ µm³ per 500 µm diameter circular area;
c) providing a substrate (26) that exhibits outgassing; and
d) bonding the article to the substrate (26) via the adhesive (18).

## Patentansprüche

1. Retroreflektierender Gegenstand, welcher eine retroreflektierende Folie (12) aufweist, die mit einer Haftschicht (18) auf eine Fläche eines Substrats (26) geklebt ist, wobei die Fläche des Substrats (26) ein Polymermaterial aufweist und die Haftschicht Mikrostrukturen (22) aufweist, welche mehrere Kanäle (24) definieren, wobei die Kanäle (24) ein Volumen von 1,0 x 10³ µm³ bis 1 x 10⁷ *µ*m³ je Kreisfläche von 500 µm Durchmesser auf der Fläche der Haftschicht (18) aufweisen, welche auf das Substrat geklebt ist.

2. Retroreflektierender Gegenstand nach Anspruch 1, wobei der Gegenstand angepasst ist, nach dem Lagern des Gegenstandes für 7 Tage bei einer relativen Luftfeuchtigkeit von 95 % und Temperaturzyklen zwischen 35 °F und 160 °F in 4-Stunden-Intervallen weniger als 10 % Schichtablösung aufzuweisen.

3. Retroreflektierender Gegenstand nach Anspruch 1, wobei der Gegenstand angepasst ist, nach dem Lagern des Gegenstandes für 7 Tage bei einer relativen Luftfeuchtigkeit von 95 % und Temperaturzyklen zwischen 35 °F und 160 °F in 4-Stunden-Intervallen weniger als 5 % Schichtablösung aufzuweisen.

4. Retroreflektierender Gegenstand nach Anspruch 1, wobei die Kanäle (24) sich bis zu einem Rand des Gegenstandes erstrecken.

5. Retroreflektierender Gegenstand nach Anspruch 1, wobei die Mikrostrukturen (22) die Kanäle (24) derart definieren, dass die Kanäle (24) nach dem Lagern des Gegenstandes für 7 Tage bei einer relativen Luftfeuchtigkeit von 95 % und Temperaturzyklen zwischen 35 °F und 160 °F in 4-Stunden-Intervallen vorhanden sind.

6. Retroreflektierender Gegenstand nach Anspruch 1, wobei es sich bei der Fläche des Substrats (26) entweder um einen Anstrich oder um Kunststoffmaterial handelt.

7. Retroreflektierender Gegenstand nach Anspruch 1, wobei das Substrat (26) ein nicht-gelagertes Polycarbonat aufweist.

8. Retroreflektierender Gegenstand nach Anspruch 1, wobei die Fläche des Klebstoffs (18), welcher auf das Substrat (26) geklebt ist, einen Kontaktflächenbereich aufweist, der von etwa 50 % bis etwa 98 % reicht.

9. Retroreflektierender Gegenstand nach Anspruch 1, wobei es sich bei dem Klebstoff (18) um einen Haftkleber handelt.

10. Retroreflektierender Gegenstand nach Anspruch 1, wobei der Klebstoff (18) einen vernetzten Acrylklebstoff aufweist.

11. Retroreflektierender Gegenstand nach Anspruch 10, wobei der Klebstoff (18) derart vernetzt ist, dass der Gelgehalt zwischen 60 % und 85 % liegt.

12. Retroreflektierender Gegenstand nach Anspruch 1, wobei die Haftschicht (18) regelmäßige Mikrostrukturen aufweist, welche an der Fläche der Haftschicht (18), welche auf das Substrat (26) geklebt ist, in einem Abstand von weniger als etwa 500 µm angeordnet sind.

13. Verfahren zur Herstellung eines retroreflektierenden Gegenstandes, welches aufweist:
a) Bereitstellen einer retroreflektierenden Folie (12);
b) Aufbringen eines mikrostrukturierten Klebstoffs (18) auf die Folie (12), wobei die mikrostrukturierte Haftschicht (18), welche der Folie (12) gegenüberliegt, mehrere Mikrostrukturen (22) aufweist, welche mehrere Kanäle (24) definieren, wobei die Kanäle ein Volumen von 1,0 x 10³ µm³ bis 1 x 10⁷ µm³ je Kreisfläche eines Durchmessers von 500 µm aufweisen;
c) Bereitstellen eines Substrats (26), welches eine Entgasung zeigt; und
d) Kleben des Gegenstandes mit dem Klebstoff (18) auf das Substrat (26).

## Revendications

1. Article rétroréfléchissant comprenant une feuille rétroréfléchissante (12) collée sur une surface d'un substrat (26) avec une couche adhésive (18), dans lequel la surface du substrat (26) comprend un matériau polymère et la couche adhésive comprend des microstructures (22) qui définissent une pluralité de canaux (24), les canaux (24) ayant un volume de 1,0 x 10³ µm³ à 1 x 10⁷ µm³ par zone circulaire de 500 µm de diamètre à la surface de la couche adhésive (18) collée sur le substrat.

2. Article rétroréfléchissant selon la revendication 1, dans lequel l'article est adapté pour présenter un délaminage inférieur à 10 % après un conditionnement de l'article pendant 7 jours à une humidité relative de 95 % et selon un cycle de températures de 35 ºF à 160 ºF à 4 heures d'intervalle.

3. Article rétroréfléchissant selon la revendication 1, dans lequel l'article est adapté pour présenter un délaminage inférieur à 5 % après un conditionnement de l'article pendant 7 jours à une humidité relative de 95 % et selon un cycle de températures de 35 ºF à 160 ºF à 4 heures d'intervalle.

4. Article rétroréfléchissant selon la revendication 1, dans lequel les canaux (24) s'étendent jusqu'à une périphérie dudit article.

5. Article rétroréfléchissant selon la revendication 1, dans lequel lesdites microstructures (22) définissent lesdits canaux (24) de sorte que les canaux (24) soient présents après un conditionnement de l'article pendant 7 jours à une humidité relative de 95 % et selon un cycle de températures de 35 ºF à 160 ºF à 4 heures d'intervalle.

6. Article rétroréfléchissant selon la revendication 1, dans lequel la surface du substrat (26) est sélectionnée parmi des matériaux qui sont des peintures et des plastiques.

7. Article rétroréfléchissant selon la revendication 1, dans lequel le substrat (26) comprend un polycarbonate non conditionné.

8. Article rétroréfléchissant selon la revendication 1, dans lequel la surface de l'adhésif (18) collé sur le substrat (26) a une aire de surface de contact d'environ 50 % à environ 98 %.

9. Article rétroréfléchissant selon la revendication 1, dans lequel l'adhésif (18) est un adhésif sensible à la pression.

10. Article rétroréfléchissant selon la revendication 1, dans lequel l'adhésif (18) comprend un adhésif acrylique réticulé.

11. Article rétroréfléchissant selon la revendication 10, dans lequel l'adhésif (18) est réticulé de sorte que la teneur en gel soit de 60 à 85 %.

12. Article rétroréfléchissant selon la revendication 1, dans lequel la couche d'adhésif (18) comprend des microstructures régulières disposées selon un écartement inférieur à environ 500 µm à la surface de la couche d'adhésif (18) collée sur le substrat (26).

13. Procédé de fabrication d'un article rétroréfléchissant, comprenant :
a) la fourniture d'une feuille rétroréfléchissante (12) ;
b) l'application d'un adhésif microstructuré (18) sur la feuille (12), dans lequel la couche adhésive microstructurée (18) opposée à la feuille (12) comprend une pluralité de microstructures (22) qui définissent une pluralité de canaux (24), les canaux ayant un volume de 1,0 x 10³ µm³ à 1 x 10⁷ µm³ par zone circulaire de 500 µm de diamètre ;
c) la fourniture d'un substrat (26) qui présente un dégazage ; et
d) le collage de l'article sur le substrat (26) au moyen de l'adhésif (18).
